# EUROPEAN PATENT APPLICATION

(11) **EP 2 101 436 A2**
(43) Date of publication of application: **16.09.2009**
(21) Application number: 09155105.1
(22) Date of filing: 13.03.2009
(51) Int. Cl.: H04L 5/00

(54) **Resource block allocation for a radio communication system**

(30) Priority: 14.03.2008 JP 2008065427
(71) Applicant: Fujitsu Limited, Kawasaki-shi, Kanagawa 211-8588 (JP)
(72) Inventor: Konta, Shinji, Kawasaki-shi, Kanagawa 211-8588 (JP)
(74) Representative: Fenlon, Christine Lesley

(57) **Abstract**

A radio communication system includes at least one mobile station and a base station, wherein one and the same two-dimensional table, in which resource block numbers are allocated to a plurality of resource blocks obtained by dividing a system bandwidth by a frequency domain, is stored in both the base station and the at least one mobile station, and allocation information representing allocation of the resource block numbers in the two-dimensional table is transmitted from the base station to one of the at least one mobile station.

## Description

### FIELD

The present invention relates to a radio communication system having a base station and a mobile station, the base station, the mobile station, and a resource block allocation method.

### BACKGROUND

In 3GPP (3rd Generation Partnership Project), there has been proposed an LTE (Long Term Evolution)-based radio communication system between a base station and a mobile station.

In LTE, a packet switching type access method is used so that radio resources are allocated based on frequency domain scheduling both in uplink and downlink communications (see 3GPP TS36.211 V8.0.0 (2007-09)).

In downlink communications, a resource block is defined as a block having consecutive sub-carriers and consecutive OFDM (Orthogonal Frequency Division Multiplexing) symbols in a transmission band. The number of resource blocks takes a value of 6 to 110 in accordance with the transmission bandwidth.

In a downlink shared data channel which is a channel used for transmission of traffic data, the transmission is performed by using resource blocks allocated by scheduling in a base station. A downlink control channel is a channel used for transmission of information (such as resource block allocation information) required for reception via the shared data channel.

A theme under discussion in 3GPP is what data is used as the resource block allocation information of the shared data channel to be transmitted via the control channel. As an idea for the theme, resource blocks are divided into consecutive subsets so that the resource block allocation information to be transmitted via the control channel is defined by bitmap information indicating resource blocks in the subsets and bitmap information (header) indicating arbitrary ones of the subsets (see 3GPP, TSG-RAN WG1 #50bis R1-074221).

Incidentally, in a system in which a base station transmits resource block allocation information to a mobile station, there has been proposed a method of transmitting the allocation information and information concerned with initial values of allocable resources and the required number of bits (e.g. see Japanese Laid-open Patent Publication No.2007-282021). There has been further proposed a method of transmitting a resource block allocation table from an MS (mobile station) to a BTS (base transceiver station) to achieve improvement in efficiency of resource management (e.g. see Japanese Laid-open Patent Publication No. 2001-275153).

As a method of dividing radio resources, there has been further proposed a method in which a base station composes radio resources in time, frequency and code in a three-dimensional space (e.g. see Japanese Laid-open Patent Publication No. 2005-117579). There has been further proposed a scheduling method in which radio resources in downlink communications are divided into resource blocks of the same size so that each allocated resource block is transmitted in a feed-forward manner (e.g. Japanese Laid-open Patent Publication No. 2006-515141).

In the related-art method in which resource blocks are divided into consecutive subsets so that the resource block allocation information to be transmitted via the control channel is defined by bitmap information indicating resource blocks in the subsets and bitmap information (header) indicating arbitrary ones of the subsets, there is a problem that the number of bits in the resource block allocation information increases. This problem is not limited to the radio communication system of 3GPP, and may occur in other radio communication systems.

### SUMMARY

Accordingly, it is desirable to provide a radio communication system which may reduce the number of bits necessary for resource block allocation.

According to an aspect of the embodiments, a radio communication system includes at least one mobile station and a base station, wherein one and the same two-dimensional table, in which resource block numbers are allocated to a plurality of resource blocks obtained by dividing a system bandwidth by a frequency domain, is stored in both the base station and the at least one mobile station, and allocation information representing allocation of the resource block numbers in the two-dimensional table is transmitted from the base station to one of the at least one mobile station.

It is to be understood that both the foregoing general description and the following detailed description are exemplary and explanatory and are not restrictive of the embodiments, as claimed.

### BRIEF DESCRIPTION OF THE DRAWINGS

FIG. 1 illustrates a configuration view of an embodiment of a downlink resource block;

FIG. 2 illustrates a block configuration diagram of an embodiment of a base station;

FIG. 3 illustrates a block configuration diagram of an embodiment of a mobile station;

FIG. 4 illustrates a configuration example of a first embodiment of a resource block table;

FIG. 5 illustrates a view for explaining allocation of resource block numbers;

FIG. 6 illustrates allocation information;

FIG. 7 illustrates a view for explaining identification of allocated resource block numbers;

FIG. 8 illustrates a state in which resource blocks are allocated to a plurality of mobile stations;

FIG. 9 illustrates a configuration example of a second embodiment of the resource block table;

FIG. 10 illustrates the configuration example of the second embodiment of the resource block table;

FIGS. 11A and 11B illustrate allocation information;

FIG. 12 illustrates a configuration example of a fourth embodiment of the resource block table;

FIGS. 13A and 13B illustrate allocation information;

FIG. 14 illustrates a state in which resource blocks are allocated to a plurality of mobile stations;

FIGS. 15A and 15B illustrate allocation information; and

FIG. 16 illustrates a table for comparison between an embodiment of the invention and an example of the related art.

### DESCRIPTION OF EMBODIMENTS

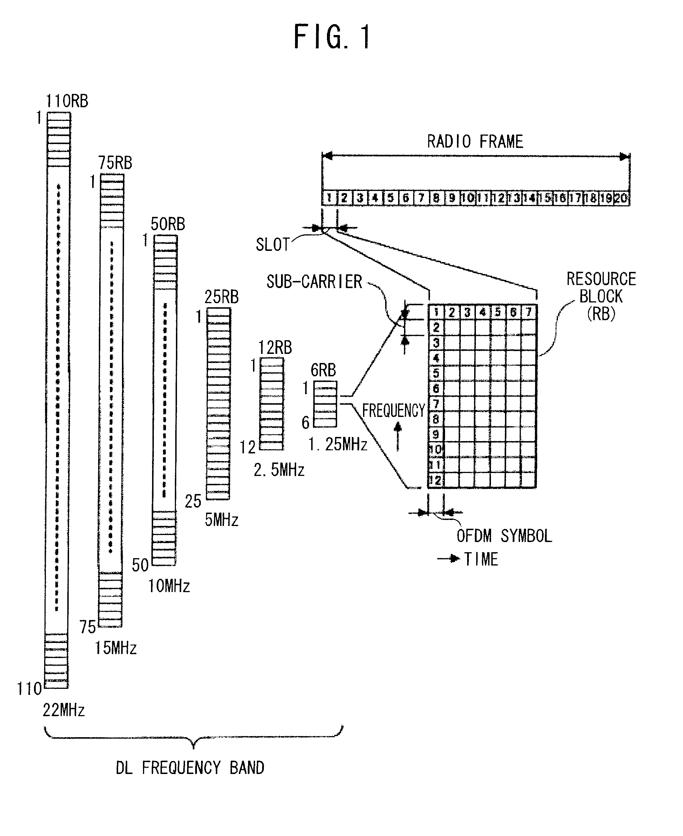

FIG. 1 illustrates a configuration view of an embodiment of a downlink resource block. One resource block is a domain having 7 OFDM symbols in a time direction and 12 sub-carriers in a frequency direction.

The number of resource blocks varies according to a frequency band to be used. When the frequency bandwidth is 1.25 MHz, the number of resource blocks is 6. When the frequency bandwidth is 2.5 MHz, the number of resource blocks is 12. When the frequency bandwidth is 5 MHz, the number of resource blocks is 25. When the frequency bandwidth is 10 MHz, the number of resource blocks is 50. When the frequency bandwidth is 15 MHz, the number of resource blocks is 75. When the frequency bandwidth is 22 MHz, the number of resource blocks is 110.

### Configuration of Base Station

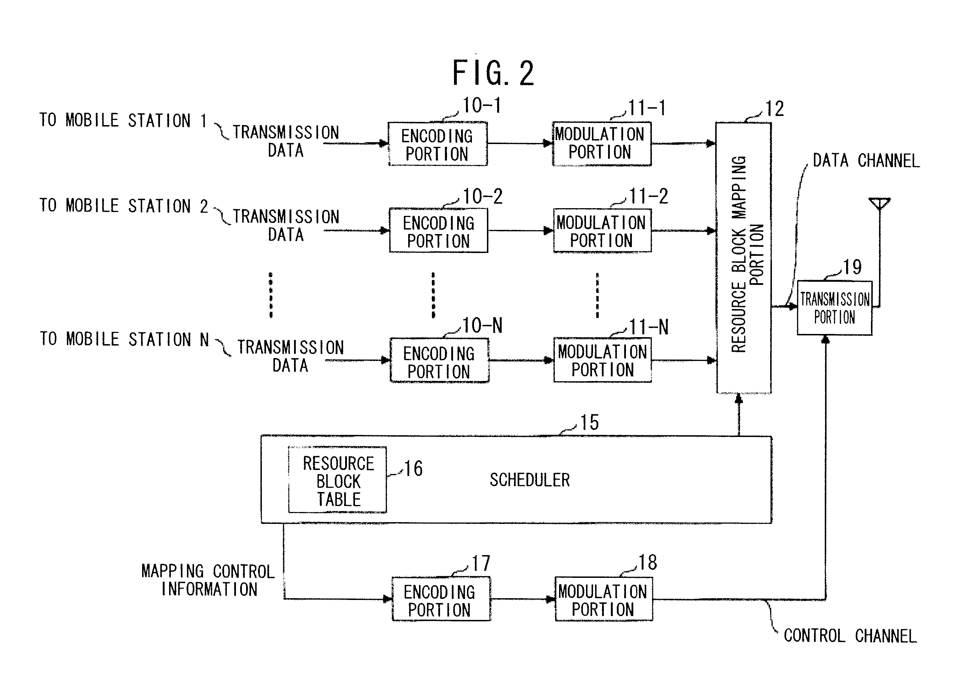

FIG. 2 illustrates a block configuration diagram of an embodiment of a base station. In FIG. 2, transmission data destined for mobile stations 1 to N are supplied to encoding portions 10-1 to 10-N and encoded by the encoding portions 10-1 to 10-N respectively. The encoded transmission data are supplied to modulation portions 11-1 to 11-N, modulated by optimum modulation methods respectively and then supplied to a resource block mapping portion 12.

A scheduler 15 has a resource block table 16, for example, stored in a non-volatile memory. The scheduler 15 controls the resource block mapping portion 12 to map respective transmission data of the mobile stations 1 to N on given resource blocks by referring to the resource block table 16. In this manner, the resource block mapping portion 12 maps the respective transmission data of the mobile stations 1 to N on the given resource blocks and supplies the mapped data to a transmission portion 19 via a data channel.

In addition, the scheduler 15 supplies mapping control information indicating respective mapping states of the mobile stations 1 to N, to an encoding portion 17. The encoding portion 17 encodes the mapping control information. The encoded control information is modulated by a given modulation method in a modulation portion 18 and supplied to the transmission portion 19 via a control channel. The transmission portion 19 multiplexes the data channel and the control channel into a signal and transmits the signal from an antenna. Configuration of Mobile Station

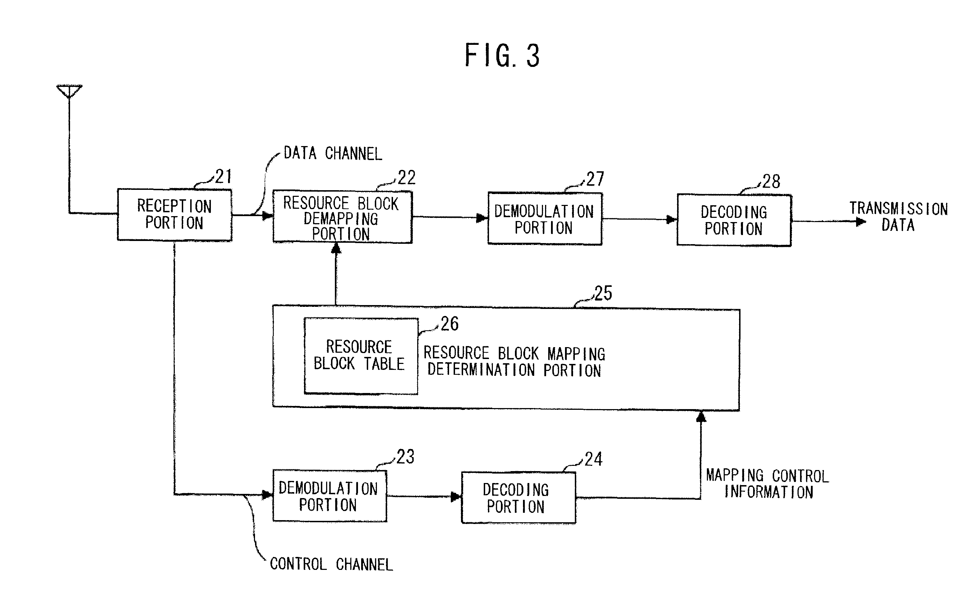

FIG. 3 illustrates a block configuration diagram of an embodiment of a mobile station. In FIG. 3, a reception portion 21 separates a signal received by an antenna into a data channel and a control channel, and supplies the data channel to a resource block demapping portion 22 while supplying the control channel to a demodulation portion 23.

The demodulation portion 23 demodulates the control channel into a signal and supplies the demodulated signal to a decoding portion 24. The decoding portion 24 decodes the demodulated signal to obtain mapping control information indicating respective mapping states of the mobile stations 1 to N, and supplies the mapping control information to a resource block mapping determination portion 25.

The resource block mapping determination portion 25 has a resource block table 26, for example, stored in a non-volatile memory. The resource block table 26 has the same contents as those of the resource block table 16 in the base station. The resource block mapping determination portion 25 extracts mapping control information indicating only the mobile station's own mapping state from the mapping control information, obtains resource block information (e.g. resource block numbers) allocated to the mobile station itself by referring to the resource block table 26 with use of the extracted mapping control information, and supplies the resource block information to the resource block demapping portion 22.

In this manner, the resource block demapping portion 22 extracts information mapped on the resource blocks allocated to the mobile station in the data channel, and supplies the extracted information to a demodulation portion 27. The demodulation portion 27 demodulates the information supplied from the resource block demapping portion 22 into a signal, and supplies the demodulated signal to a decoding portion 28. The decoding portion 28 decodes the demodulated signal and outputs the decoded signal as transmission data for the mobile station.

### First Embodiment

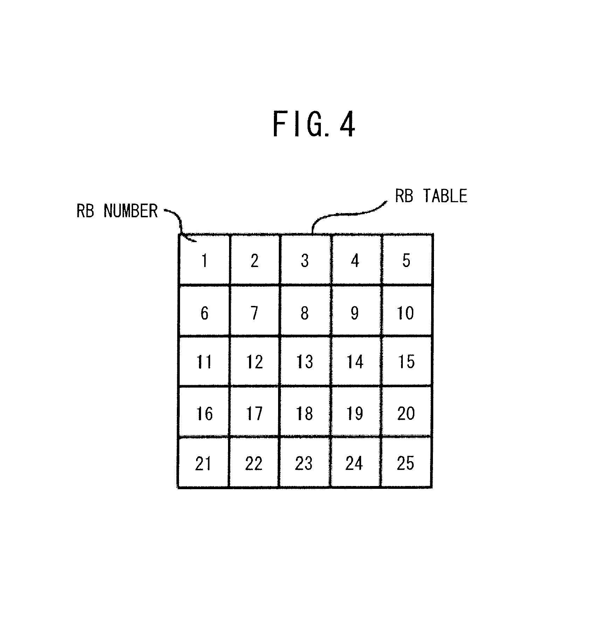

FIG. 4 illustrates a configuration example of a first embodiment of the resource block table. This configuration example illustrates the case where the frequency band is 5 MHz (the number of resource blocks is 25). In the configuration, resource block numbers are allocated to respective elements of a 5x5 table region consecutively. The resource block table illustrated in FIG. 4 is used as the resource block table 16, 26.

The size (the number of columns and the number of rows) of the table and the position of each resource block number may be determined freely while flexibility for allocating resource blocks is taken into consideration. Further, these values may be updated based on table information transmitted to each mobile station by the base station via a report channel, etc.

Similarly, for each of the frequency bands other than the 5 MHz frequency band, a common resource block table having allocated resource block numbers is held in both the base station and each mobile station. The resource block tables for respective frequency bands may be switched from one to another based on frequency band information which is transmitted to each mobile station by the base station via a report channel, etc.

Although the aforementioned embodiment has been described for the case where one table is defined for each frequency band, tables may be defined for each frequency band so that more flexible resource block allocation may be made when the tables are switched based on table selection information which is transmitted to each mobile station by the base station.

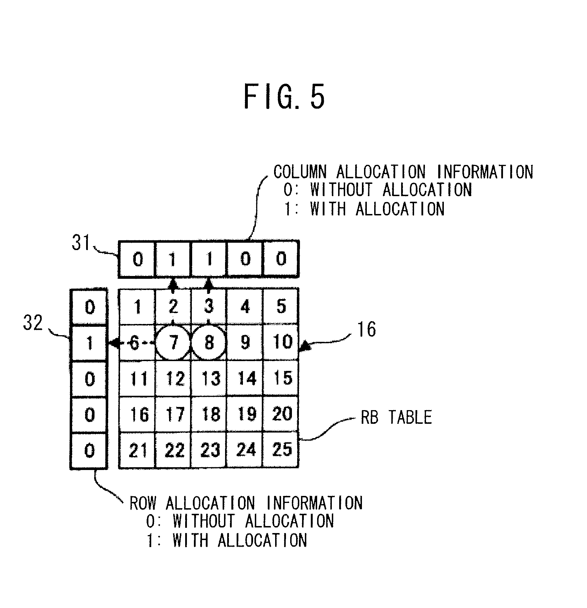

FIG. 5 illustrates a view for explaining allocation of resource block numbers. In FIG. 5, allocation information has 5-bit column allocation information 31 and 5-bit row allocation information 32.

For example, in the column allocation information 31 and the row allocation information 32, a bit of a value "1" represents "with allocation". When both a bit in the column allocation information 31 and a bit in the row allocation information 32 represent "with allocation" in the resource block table 16 of the base station, a resource block number in an intersection position between a column indicated by the bit of the column allocation information 31 and a row indicated by the bit of the row allocation information 32 is allocated to the mobile station. FIG. 5 illustrates the case where a resource block "7" and a resource block "8" are allocated to the mobile station. This allocation is performed in the scheduler 15 of the base station.

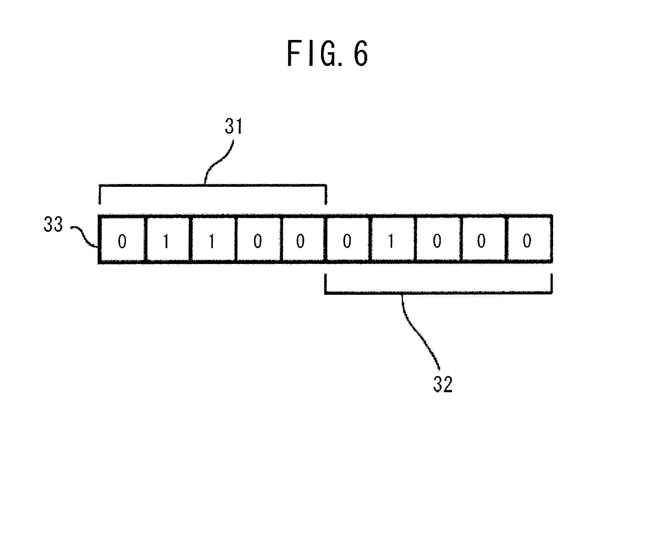

FIG. 6 illustrates a state in which the column allocation information 31 and the row allocation information 32 illustrated in FIG. 5 are combined into 10-bit allocation information 33. The 10-bit allocation information 33 is transmitted to each mobile station by the base station via the control channel.

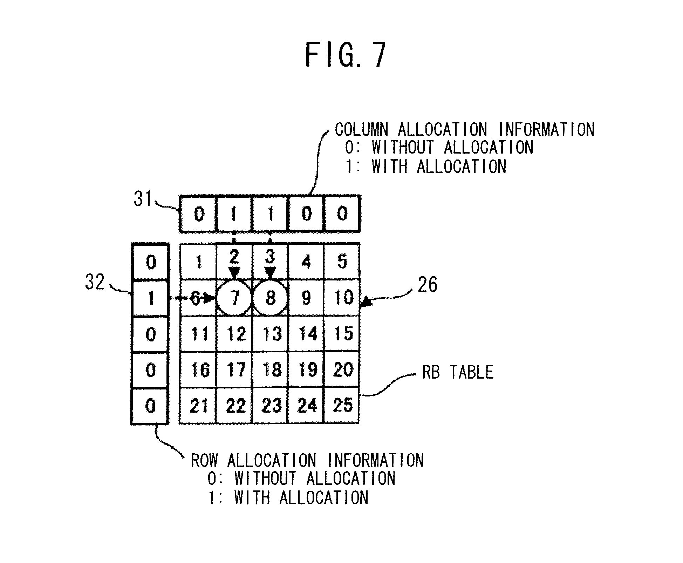

FIG. 7 illustrates a view for explaining identification of allocated resource block numbers. Upon reception of the allocation information illustrated in FIG. 6, the mobile station identifies the allocated resource block numbers by using the same resource block table 26 as that of the base station.

When both a bit in the column allocation information 31 and a bit in the row allocation information 32 represent "with allocation" in the resource block table 26 of the mobile station, a resource block number in an intersection position between a column indicated by the bit of the column allocation information 31 and a row indicated by the bit of the row allocation information 32 is identified as being allocated to the mobile station.

When resource block allocation is made in this manner based on the column allocation information and the row allocation information transmitted/received, reduction in the data quantity of the control channel can be achieved.

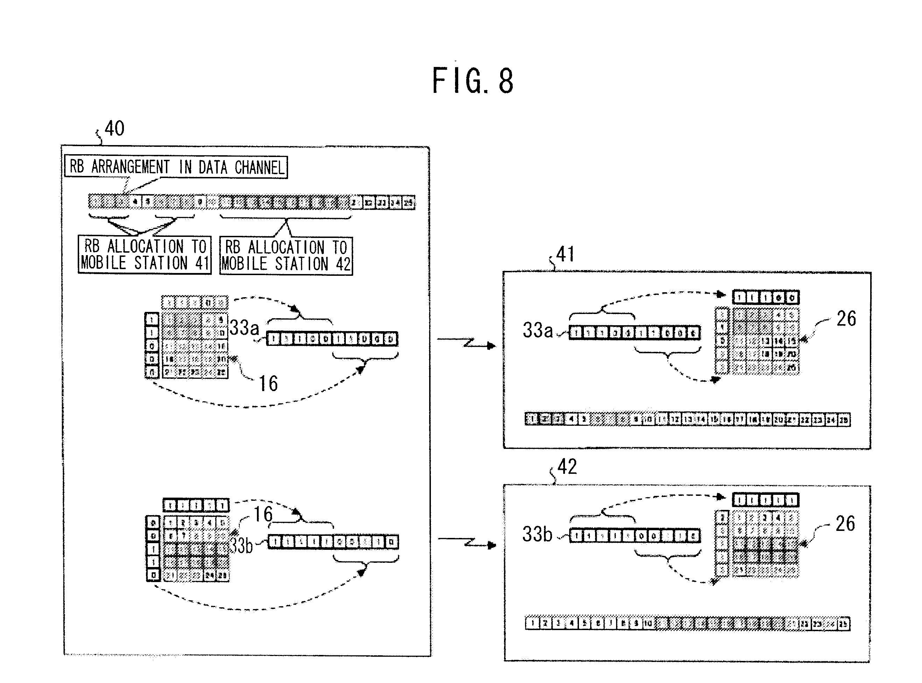

FIG. 8 illustrates a state in which resource blocks are allocated to a plurality of mobile stations in the first embodiment. In FIG. 8, a base station 40 creates allocation information 33a having column allocation information "11100" and row allocation information "11000" and transmits the allocation information 33a to a mobile station 41 via a control channel so that resource blocks of resource block numbers "1-3, 6-8" are allocated to the mobile station 41.

On the other hand, the base station 40 creates allocation information 33b having column allocation information "11111" and row allocation information "00110" and transmits the allocation information 33b to a mobile station 42 via a control channel so that resource blocks of resource block numbers "11-20" are allocated to the mobile station 42.

The mobile station 41 identifies that resource blocks of resource block numbers "1-3, 6-8" in intersection positions between columns and rows of "with allocation" (value "1") in the column allocation information and the row allocation information are allocated to the mobile station 41 itself, by referring to a resource block table 26 with use of the column allocation information "11100" and the row allocation information "11000" of the allocation information 33a.

The mobile station 42 identifies that resource blocks of resource block numbers "11-20" in intersection positions between columns and rows of "with allocation" (value "1") in the column allocation information and the row allocation information are allocated to the mobile station 42 itself, by referring to a resource block table 26 with use of the column allocation information "11111" and the row allocation information "00110" of the allocation information 33b.

### Second Embodiment

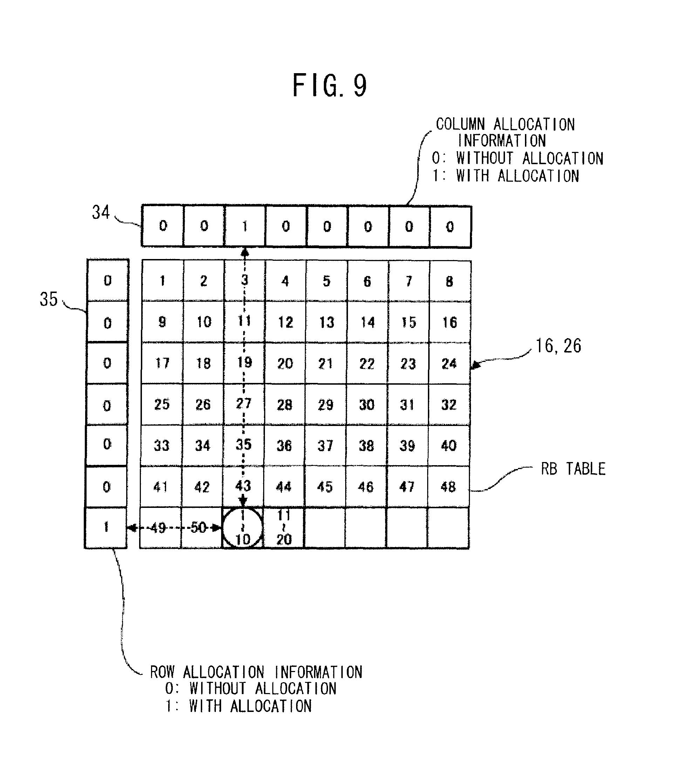

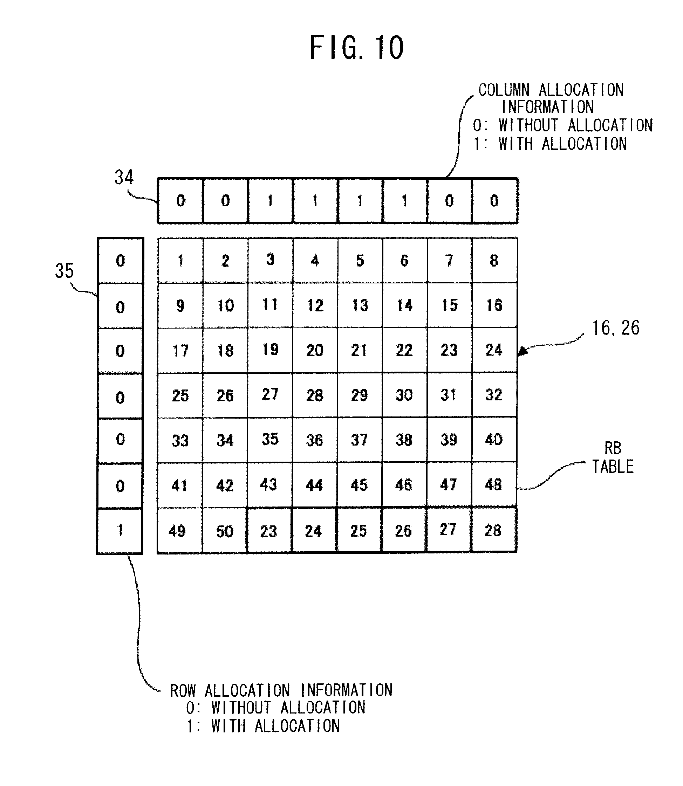

FIGS. 9 and 10 illustrate configuration examples of a second embodiment of the resource block table. The configuration examples illustrate the case where the frequency band is 10 MHz (the number of resource blocks = 50). In the configuration, resource block numbers are allocated to respective elements of an 8x7 table consecutively. This resource block table is used as a resource block table 16, 26.

Allocation information has 8-bit column allocation information 34 and 7-bit row allocation information 35. For example, in the column allocation information 34 and the row allocation information 35, a bit of a value "1" represents "with allocation".

In this case, there occur six empty regions (in the seventh row and the third to eighth columns). These empty regions are used for creation of resource block allocation patterns or allocation of redundant resource block numbers.

In the configuration example of FIG. 9, for example, a region of the seventh row and the third column is used as a resource block allocation pattern which allocates resource block numbers "1-10" when the region is set as "with allocation" and, for example, a region of the seventh row and the fourth column is used as a resource block allocation pattern which allocates resource block numbers "11-21" when the region is set as "with allocation". That is, the resource block allocation pattern performs resource block allocation without use of any resource block table. In this manner, specific consecutive resource block numbers can be allocated so that flexibility (degree of freedom) for resource block number allocation increases.

In the configuration example of FIG. 10, resource block numbers "23-28" are allocated to regions of the seventh row and the third to eighth columns. Because the resource block numbers "23-28" are also allocated to regions of the third row and the seventh and eighth columns and regions of the fourth row and the first to fourth columns, this allocation is redundant.

In the configuration example of FIG. 9, when column allocation information "11000011" and row allocation information "0011000" are intended to allocate resource numbers "23-26", this allocation cannot be achieved because resource block numbers "17, 18, 31 and 32" are also allocated erroneously in addition to allocation of the resource block numbers "23-26". In the configuration example of FIG. 10, resource block numbers "23-26" can be however allocated when column allocation information "00111100" and row allocation information "0000001" are used.

Transmission of allocation information from the base station to one or more mobile stations in this embodiment is performed in the same manner as in FIG. 8. In this embodiment, more flexible resource block allocation can be performed without an increase in quantity of information to be transmitted/received.

### Third Embodiment

In the first or second embodiment, there is no situation that the values of all bits in the column allocation information 31, 34 are "0", and there is no situation that the values of all bits in the row allocation information 32, 35 are "0". It is therefore possible to give a special meaning to the case where the values of all bits in column allocation information or row allocation information are "0".

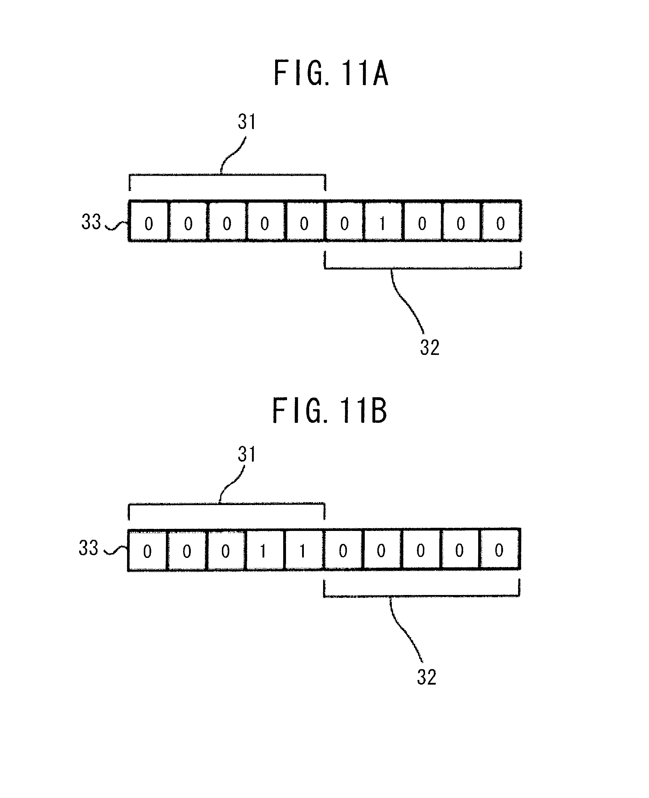

In FIG. 11A, 32 resource block allocation patterns may be designated by 5-bit row allocation information 32 when the values of all bits in column allocation information 31 are "0". For example, odd resource block numbers "1, 3,..., 23, 25" may be allocated when the values of all bits in the column allocation information 31 are "0" and the row allocation information 32 is "01000".

In FIG. 11B, 31 resource block allocation patterns may be designated by 5-bit column allocation information 31 when the values of all bits in row allocation information 32 are "0". For example, resource block numbers "1-6" may be allocated when the values of all bits in the row allocation information 32 are "0" and the column allocation information 31 is "00011".

This configuration may be applied not only to the first embodiment but also to the second embodiment. In this manner, more flexible resource block allocation can be made.

### Fourth Embodiment

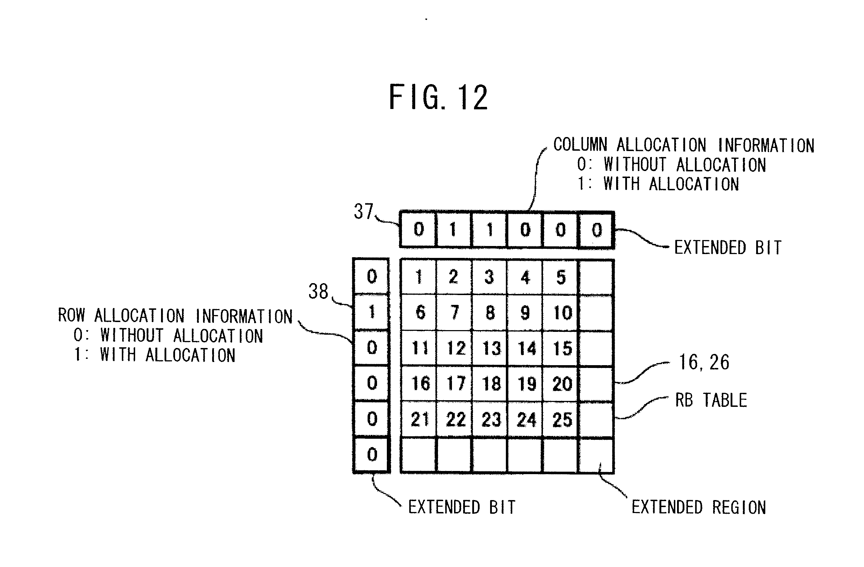

FIG. 12 illustrates a configuration example of a fourth embodiment of the resource block table. This configuration example illustrates the case where the frequency band is 5 MHz (the number of resource blocks = 25). In the configuration, resource block numbers are allocated to respective elements of a 6x6 table consecutively. This resource block table is used as a resource block table 16, 26.

Allocation information has 6-bit column allocation information 37 and 6-bit row allocation information 38. For example, in the column allocation information 37 and the row allocation information 38, a bit of a value "1" represents "with allocation".

In this case, there occur eleven empty regions (in the sixth row and the sixth column). These empty regions are used for creation of resource block allocation patterns or allocation of redundant resource block numbers.

Transmission of allocation information from the base station to one or more mobile stations in this embodiment is performed in the same manner as in FIG. 8. In this embodiment, the quantity of information to be transmitted/received increases but more flexible resource block allocation may be performed.

### Fifth Embodiment

This embodiment is provided with a function of switching between a first mode for transmission/reception of resource block table allocation information and a second mode for transmission/reception of consecutive-number resource block allocation information.

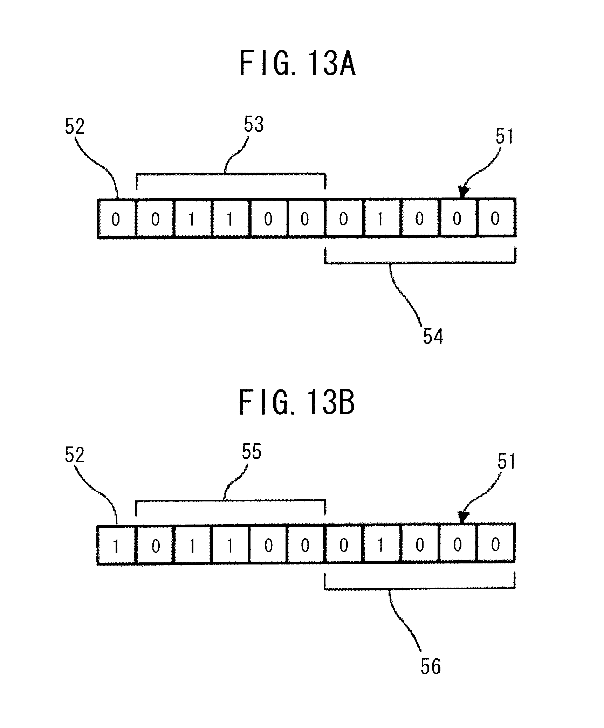

FIGS. 13A and 13B illustrate the configuration of allocation information 51 in this embodiment. A leading bit of the allocation information 51 is set as a format information bit 52. As illustrated in FIG. 13A, when the value of the format information bit 52 is "0", a bit string following the format information bit 52 is defined as a combination of column allocation information 53 and row allocation information 54 in the same manner as in the first embodiment.

As illustrated in FIG. 13B, when the value of the format information bit 52 is "1", the bit string following the format information bit 52 is defined as consecutive-number resource block allocation information. A 5-bit first half of the consecutive-number resource block allocation information is defined as start resource block number information 55, and a 5-bit last-half of the consecutive-number resource block allocation information is defined as number-of-resource-blocks information 56.

In this embodiment, addition of only 1 bit makes it possible to allocate more flexibly an allocation pattern of consecutive-number resource blocks which cannot be allocated in the first embodiment.

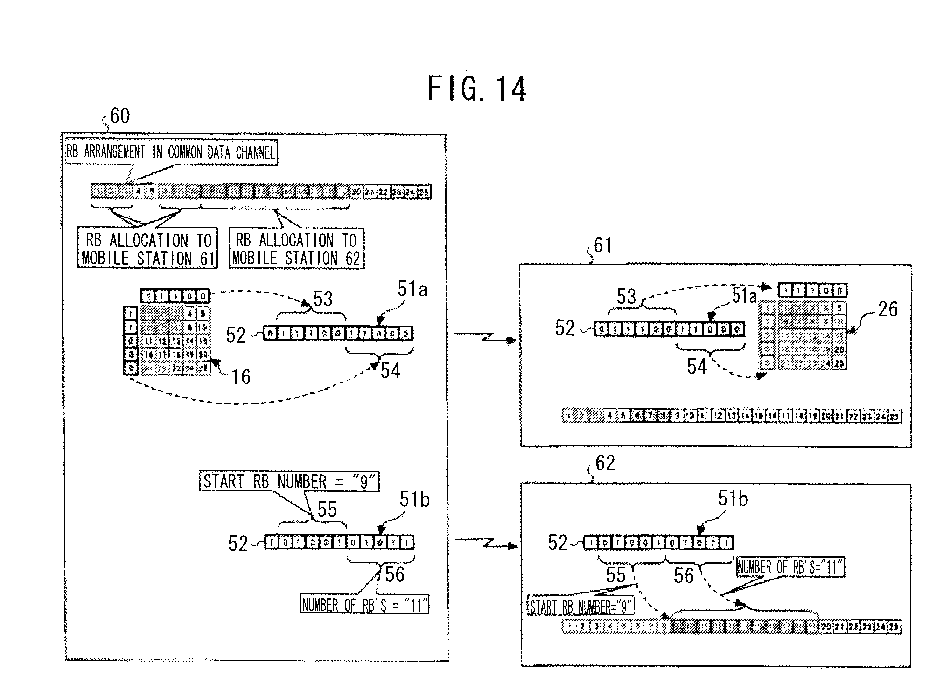

FIG. 14 illustrates a state in which resource blocks are allocated to a plurality of mobile stations in a fifth embodiment. In FIG. 14, a base station 60 creates allocation information 51a having a format information bit 52 of "0", column allocation information 53 of "11100" and row allocation information 54 of "11000" and transmits the allocation information 51a to a mobile station 61 via a control channel so that resource blocks of resource block numbers "1-3, 6-8" are allocated to the mobile station 61.

On the other hand, the base station 60 creates allocation information 51b having a format information bit 52 of "1", start resource block number information 55 of "01001" and number-of-resource-blocks information 56 of "01011" and transmits the allocation information 51b to a mobile station 62 via a control channel so that 11 resource blocks continued on the start resource block number "9" are allocated to the mobile station 62.

The mobile station 61 identifies that resource blocks of resource block numbers "1-3, 6-8" in intersection positions between columns and rows of "with allocation" (value "1") in the column allocation information and the row allocation information are allocated to the mobile station 61 itself, by referring to a resource block table 26 with use of the column allocation information "11100" and the row allocation information "11000" of the allocation information 51a.

The mobile station 62 identifies that resource blocks of resource block numbers "9-19" are allocated to the mobile station 62 itself, based on the start resource block number information "01001" and the number-of-resource-blocks information "01011" of the allocation information 51b. Sixth Embodiment

Description will be made on an embodiment for extending the second mode function for transmitting/receiving consecutive-number resource block allocation information.

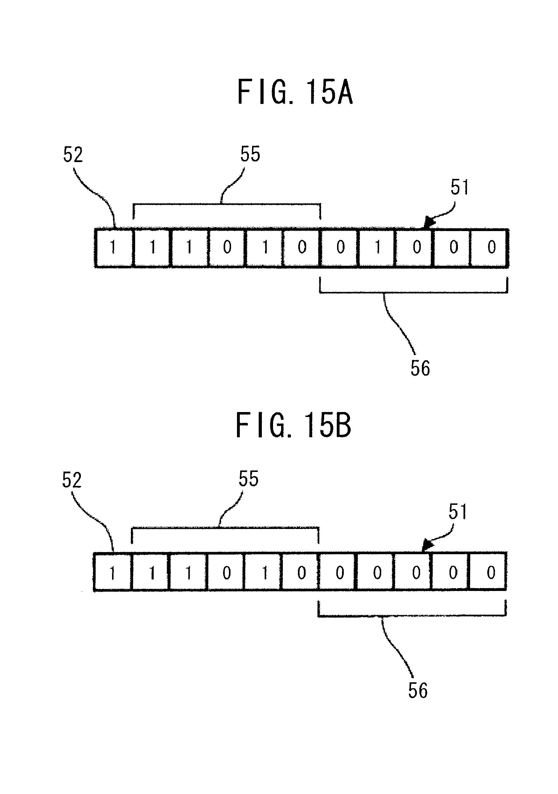

As illustrated in FIG. 15A, when the format information bit 52 is "1" and the start resource block number information 55 is "11010-11111", i.e. "26-31" in decimal notation, the start resource block number information 55 is invalid (because the total number of resource blocks is 25). Therefore, 32 resource block numbers or resource block allocation patterns indicating number-of-resource-blocks information 56 of "00000-11111" may be designated in each of the values "11010-11111" of the start resource block number information 55.

As illustrated in FIG. 15B, when the format information bit 52 is "1" and the number-of-resource-blocks information 56 is "00000", the number-of-resource-blocks information 56 is invalid (because the number of resource blocks is 0). Therefore, 32 resource block numbers or resource block allocation patterns indicating start resource block number information 55 of "00000-11111" may be designated when the number-of-resource-blocks information 56 is "00000". In this manner, more flexible resource block allocation can be performed.

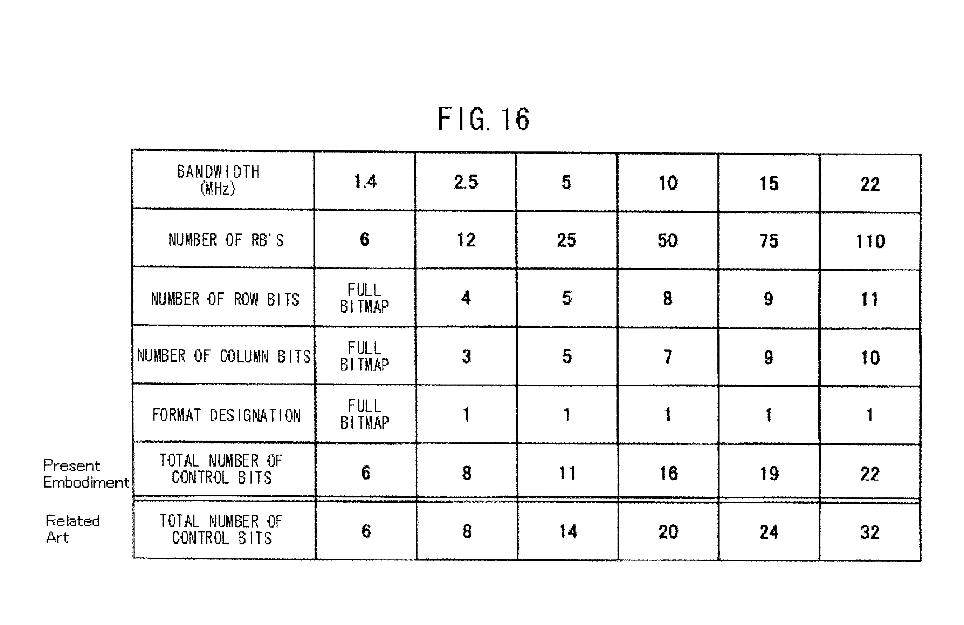

FIG. 16 illustrates the total number of control bits required for resource block allocation in each of the aforementioned embodiment and the related-art example (Non-Patent Document 2). When the bandwidth is 5 MHz, the number of resource blocks is 25. According to the aforementioned embodiment, each of the column allocation information and the row allocation information is 5 bits and the format information bit is 1 bit, i.e. the total number of control bits is 11. On the other hand, according to the related art, the total number of control bits is 14. In short, according to the embodiment, the total number of control bits can be reduced by 3 bits.

When the bandwidth is 22 MHz, the number of resource blocks is 110. According to the aforementioned embodiment, the column allocation information is 11 bits, the row allocation information is 10 bits and the format information bit is 1 bit, i.e. the number of control bits is 22. On the other hand, according to the related art, the total number of control bits is 32. In short, according to the aforementioned embodiment, the total number of control bits can be reduced by 10 bits.

Incidentally, in the aforementioned embodiment, the encoding portion 17, the modulation portion 18 and the transmission portion 19 are used as an example of the components in a transmission unit, and the demodulation portion 23, the decoding portion 24 and the resource block mapping determination portion 25 are used as an example of the components in a resource block number acquisition unit.

According to the radio communication system of certain aforementioned embodiments, the number of bits required for resource block allocation can be reduced.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A radio communication system comprising at least one mobile station and a base station, wherein:
one and the same two-dimensional table, in which resource block numbers are allocated to a plurality of resource blocks obtained by dividing a system bandwidth by a frequency domain, is stored in both the base station and the at least one mobile station; and
allocation information representing allocation of the resource block numbers in the two-dimensional table is transmitted from the base station to one of the at least one mobile station.

2. The radio communication system according to claim 1, wherein:
the allocation information has column allocation information and row allocation information in the two-dimensional table.

3. The radio communication system according to claim 2, wherein:
allocation patterns not using the two-dimensional table are allocated to empty regions of the two-dimensional table.

4. The radio communication system according to claim 2, wherein:
arbitrary resource block numbers are allocated to empty regions of the two-dimensional table.

5. The radio communication system according to claim 2, wherein:
when one of the column allocation information and the row allocation information takes a specific value, the other information is used for allocation of allocation patterns or arbitrary resource block numbers.

6. The radio communication system according to claim 3 or 4, wherein:
at least one of the column allocation information and the row allocation information is extended to create empty regions of the two-dimensional table.

7. The radio communication system according to any one of claims 1 to 6, wherein:
the allocation information has format information; and the format information is used for switching between a first mode for allocating resource block numbers by use of the two-dimensional table and a second mode for allocating consecutive resource block numbers, in accordance with the format information.

8. The radio communication system according to claim 7, wherein:
the allocation information in the second mode has start resource block number information and number-of-resource-blocks information.

9. The radio communication system according to claim 8, wherein:
when one of the start resource block information and the number-of-resource-blocks information takes a specific value, the other information is used for allocation of allocation patterns or arbitrary resource block numbers.

10. A base station in a radio communication system including at least one mobile station and the base station, comprising:
a two-dimensional table which is one and the same as that of the at least one mobile station and in the two-dimensional table resource block numbers are allocated to resource blocks obtained by dividing a system bandwidth by a frequency domain; and
a transmission unit which transmits allocation information representing allocation of the resource block numbers in the two-dimensional table, to one of the at least one mobile station.

11. A mobile station in a radio communication system including at least one mobile station and a base station, comprising:
a two-dimensional table, which is one and the same as that of the base station and in the two-dimensional table resource block numbers are allocated to resource blocks obtained by dividing a system bandwidth by a frequency domain; and
a resource block number acquisition unit which acquires resource block numbers allocated to the mobile station itself by referring to the two-dimensional table with use of allocation information transmitted from the base station.

12. A resource block allocation method in a radio communication system including at least one mobile station and a base station, comprising:
storing one and the same two-dimension table, in which resource block numbers are allocated to resource blocks obtained by dividing a system bandwidth by a frequency domain, in both the base station and the at least one mobile station; and
transmitting allocation information representing allocation of the resource block numbers in the two-dimensional table, from the base station to one of the at least one mobile station.
